# EUROPÄISCHE PATENTSCHRIFT

(11) **EP 2 428 473 B1**
(45) Veröffentlichungstag und Bekanntmachung des Hinweises auf die Patenterteilung: **23.11.2016**
(21) Anmeldenummer: 11007516.5
(22) Anmeldetag: 14.09.2011
(51) Int. Cl.: B65G 47/88, B65G 59/06

(54) **Vereinzler mit Kulissengetriebe**
Separator with link gear
Séparateur doté d'un engrenage à coulisses

(30) Priorität: 14.09.2010 DE 102010045289
(43) Veröffentlichungstag der Anmeldung: 14.03.2012
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- US-A- 3 677 439
- US-B1- 6 450 322

## Beschreibung

Die Erfindung betrifft einen Vereinzler mit zwei in Führungslängsrichtung geführten Schlitten, die jeweils einen Stößel tragen, wobei die Schlitten antreibbar mit mindestens einem Stellglied in einem Gehäuse gelagert sind, wobei die Schlitten die Stößel zwischen einer ausgefahrenen und einer eingefahrenen Stellung bewegen.

Ein Vereinzler mit zwei Schlitten ist eine Vorrichtung mit deren Hilfe i.d.R. Werkstücke separiert werden, die in einer Reihe am Vereinzler vorbeigeführt werden. Der Vereinzler lagert in einem Gehäuse zwei z.B. über zwei zweifachwirkende, pneumatische Zylinder-Kolben-Einheiten geführte Schlitten, die wechselweise ausfahren, um sich z.B. an einem ankommenden Werkstück an zwei Seiten abwechselnd anzulegen. An den freien Enden tragen die Schlitten jeweils einen Stößel, um zwischen die ankommenden Werkstücke eingreifen zu können. Ein derartiger Vereinzler ist aus einem Katalog der Sommer-Automatik GmbH & Co.KG bekannt. Im Katalog aus dem Jahr 2008 wird der Vereinzler unter der Bezeichnung "Serie VE-B" geführt.

Die US 3 677 439 A zeigt einen Automaten zum Abheben des obersten Eierkartons eines Eierkartonstapels mit einem Vereinzler. Der Vereinzler weist zwei in Führungslängsrichtung geführte Schlitten mit jeweils einem Vereinzelungsabschnitt auf, wobei die Schlitten antreibbar mit mindestens einem Stellglied in dem Gehäuse gelagert sind, wobei die Schlitten die Vereinzelungsabschnitte zwischen einer ausgefahrenen und einer eingefahrenen Stellung bewegen, wobei beide Schlitten durch ein Stellglied antreibbar sind, wobei zwischen dem bewegbaren Teil des Stellglieds und den Schlitten ein Kulissengetriebe angeordnet ist, wobei das Kulissengetriebe pro Schlitten eine antreibende Kurvenplatte aufweist, wobei jede Kurvenplatte eine Schlittensteuerkurve aufweist, wobei jeder Schlitten einen Schlittenführungsstift zum Eingriff in eine Schlittensteuerkurve aufweist, wobei jede Schlittensteuerkurve einen ersten und weiten Abschnitt aufweist, wobei der erste Abschnitt quer zur Ausfahrrichtung der Schlitten orientiert ist, und der zweite Abschnitt geneigt zur Ausfahrrichtung der Schlitten orientiert ist.

Aus der US 6 450 322 B1 ist ein Vereinzler nach dem Oberbegriff des Anspruchs 1 bekannt.Beide Schlitten des Vereinzlers sind pneumatisch antreibbar.

Der vorliegenden Erfindung liegt die Problemstellung zugrunde, einen Vereinzler zu entwickeln, dessen Schlitten für ihren Antrieb einen geringen Energiebedarf haben. Zudem soll der Vereinzler aus möglichst wenigen, unkomplizierten Einzelteilen gefertigt sein. Seine Schlitten sollen sich bei wartungsarmer, einfacher und sicherer Handhabung reaktionsschnell aus- und einfahren lassen und in ihren Endlagen sicher positioniert bleiben.

Diese Problemstellung wird mit den Merkmalen des Patentanspruchs 1 gelöst. Dazu sind beide Schlitten durch ein einziges Stellglied elektrisch antreibbar, wobei dieses Stellglied aus einer Tauchspule und einem Topfmagnet besteht. Zwischen dem bewegbaren Teil des Stellglieds und den Schlitten ist ein Kulissengetriebe angeordnet. Das Kulissengetriebe weist pro Schlitteneinen antreibenden Kurvenstein und mindestens eine gehäuseseitige Kulissenkurve auf. Jeder Kurvenstein hat mindestens einen Steinsteuerkanal und eine Schlittensteuerkurve, wobei der Steinsteuerkanal an einer Führungsstange des bewegbaren Teils des Stellglieds geführt ist. Jeder Kurvenstein weist mindestens einen Steinzapfen zum Eingriff in eine gehäuseseitige Kulissenkurve auf. Jeder Schlitten hat mindestens einen Schlittenführungsstift zum Eingriff in eine Schlittensteuerkurve. Jede Kulissen- und jede Schlittensteuerkurve hat mindestens einen ersten Abschnitt, der mit der Ausfahrrichtung der Schlitten einen Winkel von 87 bis 93 Winkelgraden einschließt. Jede Kulissen- und jede Schlittensteuerkurve weist mindestens einen zweiten Abschnitt auf, der zur Ausfahrrichtung der Schlitten einen Winkel von 30 bis 150 Winkelgraden einschließt.

Das die Vereinzlerschlitten antreibende elektrodynamische Stellglied basiert auf einem aus dem Lautsprecherbereich bekannten Tauchspulenprinzip. Eine bestrombare Tauchspule eines Lautsprechers wird dabei linear beweglich im Spalt eines Topfmagnets geführt. Der Topfmagnet stellt ein konstantes Magnetfeld zur Verfügung. Ein Bestromen der Tauchspule führt aufgrund der prinzipbedingten Lorenzkraft zu einer Relativbewegung zwischen der Spule und dem Topfmagnet. Die Schubkraft dieses Stellglieds ist eine Funktion des Stromes. Die Richtung der Schubkraft wird durch die Spannungspolarität vorgegeben. Die Relativbewegung zwischen dem ortsfesten und dem beweglichen Teil des Stellgliedes wird benutzt, um die Vereinzlerschlitten bzw. die Stößel gegenüber ihrem tragenden Gehäuse zu verschieben.

Im Ausführungsbeispiel ist die Tauchspule ortsfest am Vorrichtungsgehäuse befestigt, während der Topfmagnet als bewegliches Teil auf die entsprechenden Vereinzlerteile wirkt. Selbstverständlich kann auch der Topfmagnet im Gehäuse ortsfest angeordnet sein, während die Tauchspule - wie beim Lautsprecher - die antreibende Relativbewegung ausführt.

Das elektrodynamische Stellglied, das selbstverständlich auch ein konventioneller Hubmagnet sein kann, wird innerhalb des Gehäuses des Vereinzlers sowohl zum Ausfahren als auch zum Einfahren der Vereinzlerschlitten bzw. deren Stößel bestromt.

Im Gehäuse wirkt der bewegliche Teil des Stelltriebes pro Schlitten auf ein Zwischenelement, das sich zweidimensional entlang der Gehäuse- bzw. entlang der Deckelinnenseite bewegt. Die jeweilige Bahnkurve dieser Bewegung ist durch entsprechende Führungselemente fest vorgegeben. Im Verhältnis zu den Zwischenelementen verfahren die Schlitten nur eindimensional. Der einzelne Schlitten und das zugehörige Zwischenelement sind über ein entsprechendes Führungspaar zwangsweise gekoppelt, wobei ein Bauteil des Führungspaares wiederum eine Bahnkurve beschreibt, die nicht nur quer zur Ausfahrrichtung der Schlitten orientiert ist.

Durch eine Querbewegung des beweglichen Teils des Stelltriebes erfährt das Zwischenelement eine Quer- und eine Hubbewegung. Diese erste Hubbewegung wird auf den jeweiligen Schlitten übertragen. Durch die zwischen dem Zwischenelement und dem jeweiligen Schlitten gelegene Bahnkurve wird bei dem Schlitten eine zweite Hubbewegung überlagert.

Weitere Einzelheiten der Erfindung ergeben sich aus den Unteransprüchen und der nachfolgenden Beschreibung eines schematisch dargestellten Ausführungsbeispiels.
- Figur 1:: dimetrisch dargestellter Vereinzler;
- Figur 2:: wie Figur 1, jedoch ohne Stößel, Rückseitenansicht;
- Figur 3:: Längsschnitt zu Figur 1;
- Figur 4:: wie Figur 3, jedoch mit anderer Schlittenposition;
- Figur 5:: Schlittenpositionen: erster Schlitten eingefahren;
- Figur 6:: Schlittenpositionen: beide Schlitten auf fast gleicher Höhe;
- Figur 7:: Schlittenpositionen: zweiter Schlitten eingefahren;
- Figur 8:: dimetrisch dargestelltes Gehäuse;
- Figur 9:: dimetrisch dargestellter Gehäusedeckel;
- Figur 10:: dimetrisch dargestellter Mitnehmer;
- Figur 11:: dimetrisch dargestellter Kurvenstein, Innenseite;
- Figur 12:: dimetrisch dargestellter Kurvenstein, Außenseite;
- Figur 13:: dimetrisch dargestellter, teilweise längsgeschnittener Vereinzler mit detaillierter Stellglieddarstellung. Diese Figur dient nur der Beschreibung des Stellglieds. Der gezeigt Vereinzler ist mit Ausnahem des Stellglieds nicht Teil der Erfindung;
- Figur 14:: Längsschnitt zu Figur 13 mit ausgefahrenem Schlitten. Diese Figur dient nur der Beschreibung des Stellglieds. Der gezeigt Vereinzler ist mit Ausnahem des Stellglieds nicht Teil der Erfindung;

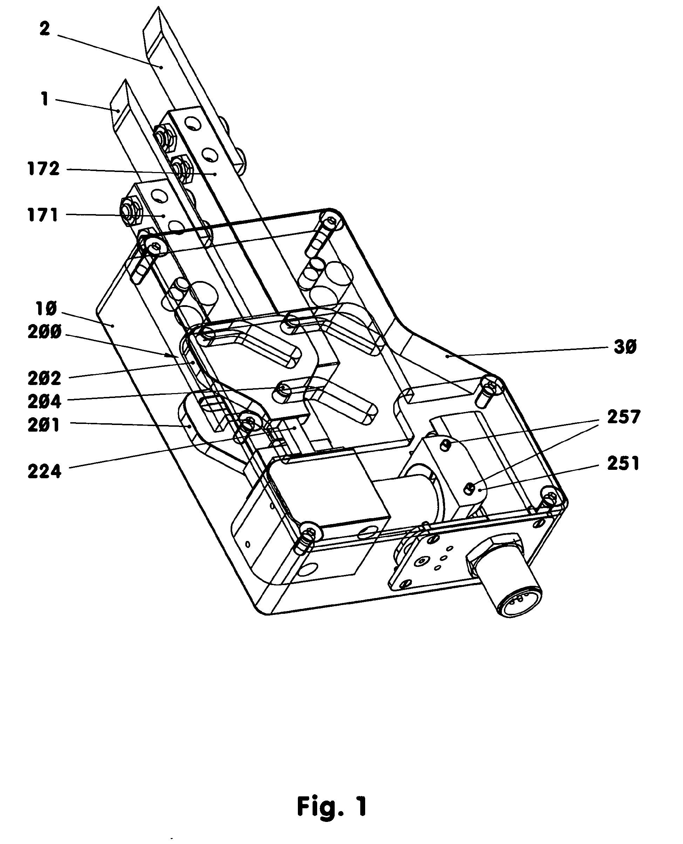

Nach Figur 1 besteht das Gehäuse (10, 30) im Wesentlichen aus einem Stellgliedgehäuse (10) und einem Gehäusedeckel (30). Beide Gehäuseteile sind aus einer Aluminiumlegierung hergestellt. Ihre Oberflächen sind hartcoatiert, bzw. anodisch oxidiert.

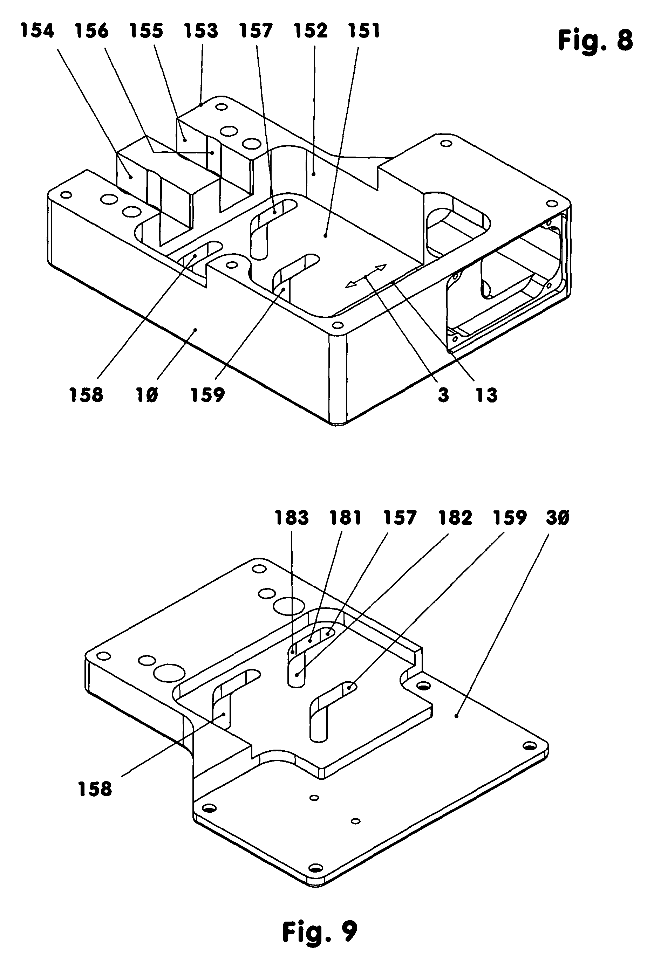

Im Gehäuse (10, 30) befindet sich zwischen der Gehäuserückwand (151) und der Wandung des Gehäusedeckels (30) eine große quaderförmige Ausnehmung (152) zur Aufnahme des Kulissengetriebes (200), vgl. Figuren 8 und 9.

Das Kulissengetriebe (200) hat die Aufgabe, eine ein- und ausfahrende Hubbewegung des elektrodynamischen Stellglieds (110) in Aus- und Einfahrbewegungen von zwei Schlitten (171, 172) umzuwandeln. Hierbei schließt die Hubbewegung des beweglichen Teils des Stellgliedes (110) mit der Hubbewegung der Schlitten (171, 172) einen Winkel von z.B. 90 Winkelgraden ein. Dieser Winkel kann konstruktionsbedingt um ± 45 Winkelgrade variieren.

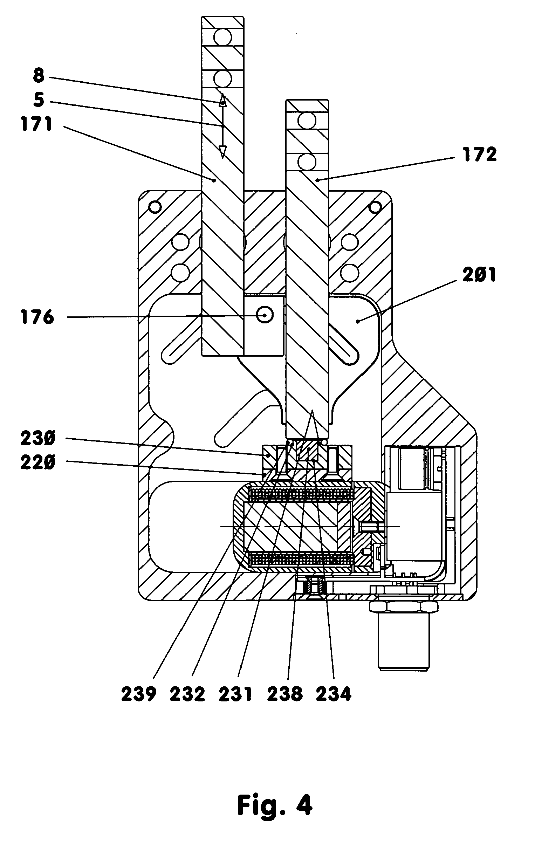

Das Stellglied (110) ist im unteren Bereich des Gehäuses (10) quer zur Führungslängsrichtung (5), vgl. Figur 4, der Schlitten (171, 172) angeordnet. Im oberen Bereich des Gehäuses (10) befinden sich zwei Führungskanäle (154) und (155) zur Lagerung und Führung der Schlitten (171, 172), vgl. Figur 8. Letztere und die Führungskanäle (154, 155) haben rechteckige bzw. quadratische Querschnitte. In den Führungsflächen eines jeden Führungskanales (154, 155) ist im mittleren Bereich jeweils mindestens eine Schmiertasche (156) eingearbeitet. Die Führungskanäle (154, 155) des Gehäuses (10) führen die Schlitten (171, 172) auf drei Längsseiten, während der Deckel (30), vgl. Figur 9, jeweils die vierte Schlittenseite führt.

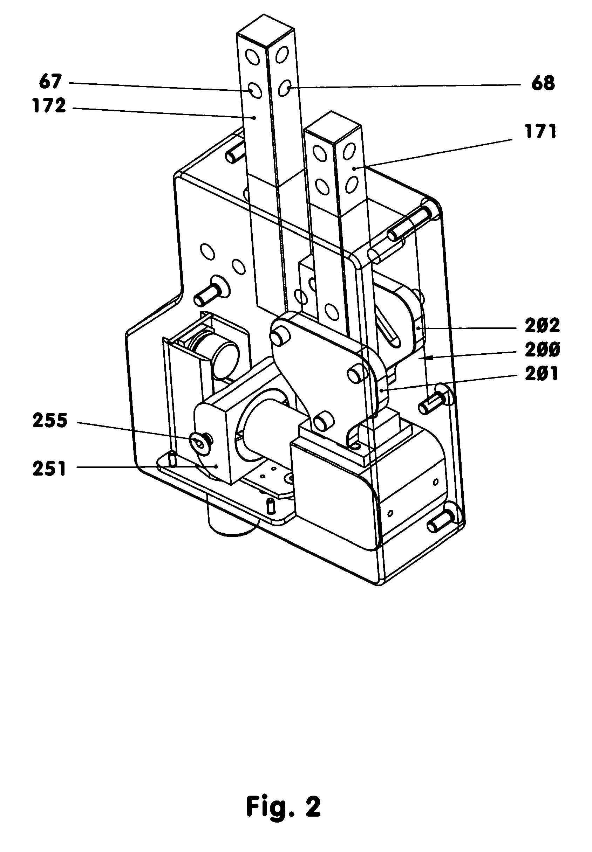

Die Schlitten (171, 172) sind hier Vierkantstäbe mit quadratischem Querschnitt. An ihren aus dem Gehäuse (10, 30) herausragenden Enden weisen sie jeweils vier Querbohrungen (67, 68) zur Adaption der Stößel (1, 2) auf, vgl. Figuren 1 und 2. Je zwei Bohrungen (67) und (68) schneiden sich senkrecht.

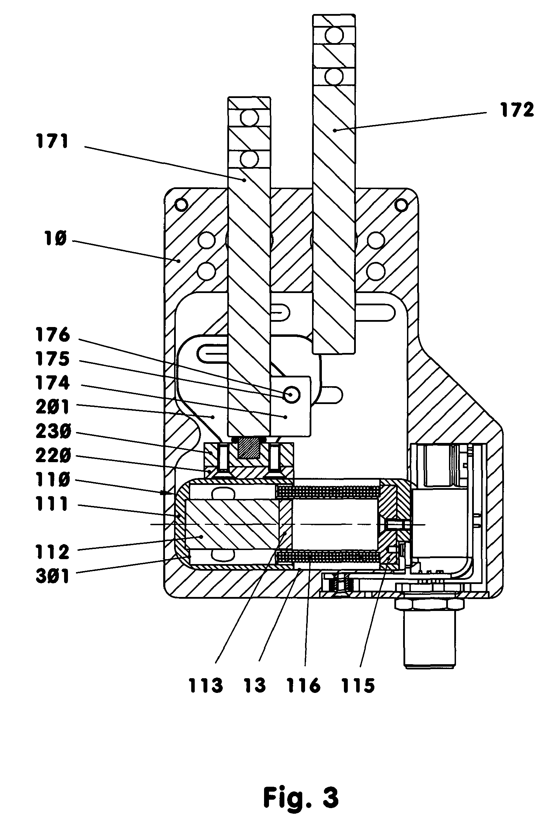

Das jeweils in das Gehäuse (10, 30) ragende Ende trägt einen seitlich zur Gehäusemitte hin abstehenden Lappen (174), vgl. Figur 3. Jeder Lappen (174) hat eine Bohrung (175), in der ein Schlittenführungsstift (176) befestigt ist. Die Lappen (174) und die Schlittenführungsstifte (176) der benachbarten Schlitten (171, 172) sind gegeneinander tiefenversetzt angeordnet, so dass sie sich bei wechselweisem Aus- oder Einfahren nicht berühren. Nach Figur 3 liegt beim Schlitten (172) der Lappen vor der Zeichenebene, womit er hier nicht darstellbar ist.

Beide Schlitten (171, 172) können baugleich sein.

Auf der Innenseite der Gehäuserückwand (151) und auf der Innenseite des Deckels (30) sind jeweils drei z.B. winkelförmige, kanalartige Kulissenkurven (157, 158, 159) eingearbeitet. Dabei haben die Kulissenkurven senkrecht zur jeweiligen Führungsrichtung z.B. einen rechteckigen Querschnitt. Jede der Kulissenkurven (157-159) besteht z.B. aus zwei geraden Abschnitten (181, 182), die sich unter einem Winkel von z.B. 45 Winkelgraden treffen. Der eine Abschnitt (181) verläuft hier parallel zur Stellgliedhubrichtung (3), während der andere Abschnitt (182) nach den Figuren 8 und 9 nach links unten abgewinkelt ist. Der parallele bzw. bezogen auf die Darstellung in den Figuren horizontale Abschnitt (181) beträgt im Ausführungsbeispiel 2/5 des Gesamthubs - gemessen parallel zur Stellgliedhubrichtung (3) -, während der nach unten abgewinkelte Abschnitt (182) 3/5 des Gesamthubs in Querrichtung ausmacht.

Die planen Gehäuseinnenflächen der Ebenen, in denen die Kulissenkurven (157-159) angeordnet sind, sind ggf. mit einem Dauergleitwerkstoff, z.B. mit Teflon, beschichtet.

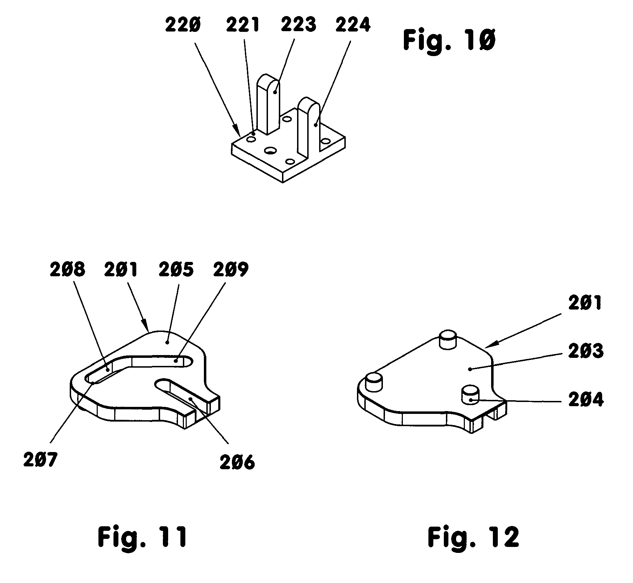

In die Kulissenkurven (157-159) des Gehäuses (10) greift ein Kurvenstein (201) mit seinen drei Steinzapfen (204) ein, vgl. Figuren 11 und 12. Ein zweiter Kurvenstein (202) wird in den Kulissenkurven (157-159) des Deckels (30) geführt, vgl. Figur 1.

Der in den Figuren 11 und 12 dargestellte Kurvenstein (201, 202) ist im Wesentlichen eine ebene Platte, auf deren Rückseite (203) drei zylindrische Steinzapfen (204) angeformt oder montiert sind, vgl. Figur 12. Alle drei Steinzapfen (204) haben parallele Mittellinien. In die Vorderseite (205) jedes Kurvensteins (201, 202) sind zwei Kanäle (206, 207) eingearbeitet. Der hier kürzere Kanal ist ein gerader Steinsteuerkanal (206). Der längere, unter 45 Winkelgraden abgewinkelte Kanal stellt eine Schlittensteuerkurve (207) dar. Im Ausführungsbeispiel sind beide aus einem Einsatzstahl gefertigte, nitrierte Kurvensteine (201, 202) baugleich. Die Kurvensteine können auch aus einem Kunststoff, z.B. POM, hergestellt sein.

Beim Eingriff in die Kulissenkurven (157-159) liegt jeder Kurvenstein (201, 202) flach - zur eigenen Führung - auf der jeweiligen Gehäuseinnenwandung auf.

Der Kurvenstein (201) liegt beim Einbau in das Gehäuse (10) unterhalb des Schlittens (171). Hierbei ragt der Schlittenführungsstift (176) des Schlittens (171) in die Schlittensteuerkurve (207) des Kurvensteins (201) hinein, vgl. Figur 3 und 4.

Der Kurvenstein (202) liegt am Deckel (30) an. In seine Schlittensteuerkurve (207) greift der Schlittenführungsstift (176) des Schlittens (172) ein, vgl. Figur 2.

Beide Kurvensteine (201, 202) sind über ihren Steinsteuerkanal (206) mit Hilfe eines Mitnehmers (220) am beweglichen Teil des Stellgliedes (110) gekoppelt. Nach Figur 10 besteht der Mitnehmer (220) aus einer ebenen Flanschplatte (221) und zwei davon senkrecht abstehenden Führungsstangen (223, 224). Der Mitnehmer (220), der aus einem nitrierten Einsatzstahl gefertigt ist, greift mit seinen Führungsstangen (223, 224) in den entsprechenden Steinsteuerkanal (206) der Kurvensteine (201, 202) ein. Dazu haben die Führungsstangen (223, 224) jeweils einen rechteckigen oder quadratischen Querschnitt.

Die Flanschplatte (221) liegt innerhalb des Gehäuses (10, 30) in einer Ebene, die normal zur Hubrichtung der Schlitten (171, 172) orientiert ist.

Nach den Figuren 3 und 4 ist das bewegliche Teil des Stellgliedes (110) die Glocke (111). Die Glocke (111) ist ein quaderförmiger Körper mit einer zentralen Bohrung (301). Zwei seiner der Spule (115, 116) abgewandten Kanten sind z.B. mit einem 6 mm-Radius abgerundet. Am Boden der zentralen Bohrung (301) ist zentriert die Kombination aus Magnetkern (112) und Jochplatte (113) befestigt.

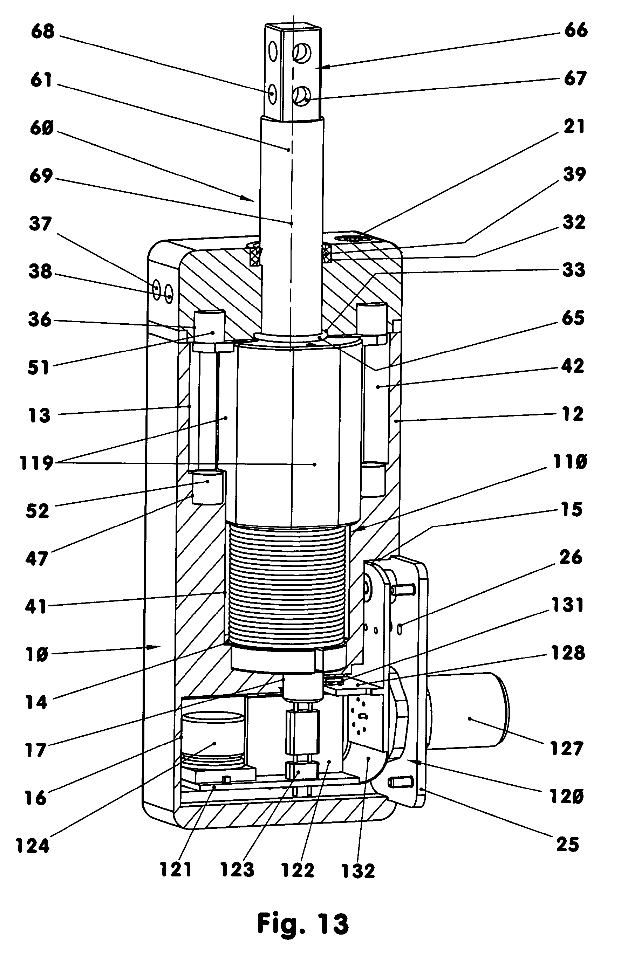

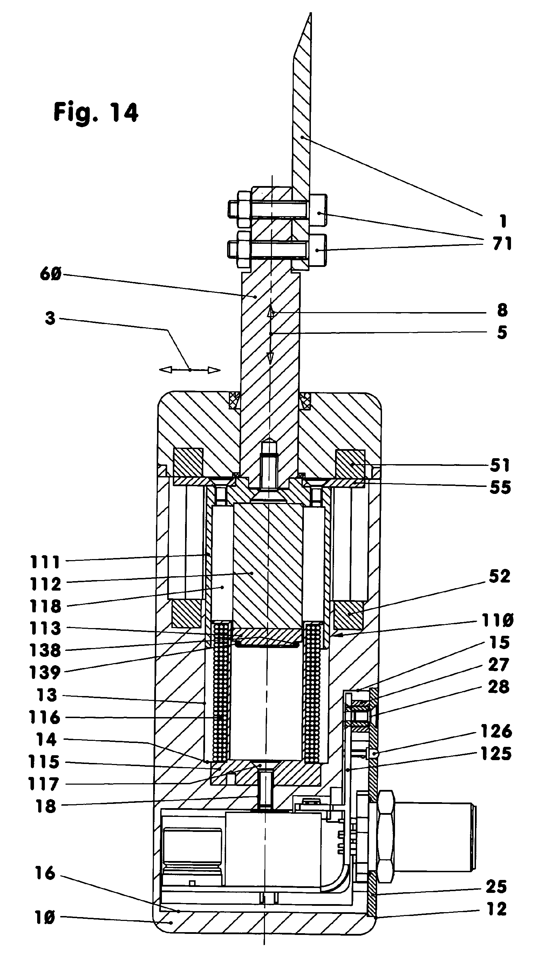

Zur ausführlichen Beschreibung des Stellgliedes (110) wird auf Zeichnungen eines Vereinzlers nach den Figuren 13 und 14 zurückgegriffen. Dieser Vereinzler hat nur einen Schlitten (60), der vom Stellglied (110) der Figuren 13 und 14 direkt angetrieben wird. Dieses Stellglied (110) entspricht - bis auf die Glocke (111) - weitgehend dem Stellglied nach den Figuren 1 bis 4.

Im Gehäuse (10) der Figuren 13 und 14 befindet sich - u.a. zur Aufnahme der Stellgliedansteuerungselektronik (120) - eine Ausnehmung, die von der rechten Wandung (12) aus in das Stellgliedgehäuse eingearbeitet ist. Sie besteht aus einer rechteckigen Ausnehmung (15) mit großem Querschnitt und geringer Tiefe, sowie einer daran anschließenden tiefen, ebenfalls rechteckigen Ausnehmung (16) mit kleinerem Querschnitt. In der tiefen Ausnehmung (16) ist auf einer unteren, horizontalen Platine (121) eine Elektronik zur Ansteuerung des Stellgliedes (110) untergebracht, während in der großflächigen Ausnehmung (15) eine seitliche Platine (125) sitzt, an der u.a. ein Gerätestecker (127), drei Leuchtdioden (126) und eine Aufsatzplatine (128) mit einem Hallsensor (131) angeordnet sind. Die z.B. rechtwinkelig zueinander platzierten Platinen (121, 125) sind über eine mit Leiterbahnen ausgestattete flexible Filmplatine (132) miteinander verbunden. Ggf. werden die Platinen (121, 125, 132) zwischen zwei einander gegenüberliegenden Kunststoffformteilen eingeklemmt. Dazu haben die Kunststoffformteile Führungsnuten, in die die Platinen ca. 0,5 mm tief eingesteckt sind.

Die Ausnehmung (15) wird mittels eines Gehäusedeckels (25) nahezu gasdicht verschlossen. Am Gehäusedeckel (25) ist die Platine (121) unter Zwischenlegung einer Distanzhülse (27) mittels einer Spezialverschraubung (28) befestigt. Zugleich trägt der Gehäusedeckel (25) den Gerätestecker (127). Zwischen der Platinenverschraubung (28) und dem Gerätestecker (127) befinden sich drei nebeneinander liegende Bohrungen (26), in die die Leuchtdioden (126) hineinragen.

Eine Stufenbohrung (13) und die tiefe Ausnehmung (16) sind über drei nebeneinander liegende Bohrungen (17, 18) miteinander verbunden. Die mittlere, kleinere Bohrung ist eine Gewindebohrung (18), in der das ortsfeste Teil des Stellgliedes (110) verschraubt wird. In den beiden größeren Bohrungen (17) stecken Isolierhülsen, in denen die elektrischen Anschlüsse des Stellgliedes (110) in die untere Ausnehmung (16) geführt werden.

Das im Stellgliedgehäuse (10) eingebaute Stellglied (110) besteht aus einem ortsfesten und einem linear beweglichen Teil, vgl. auch Figur 2. Das ortsfeste Teil ist eine Spule, die aus einem Spulenkörper (115) und einer Wicklung (116) besteht. Der Spülenkörper (115) ist mittels einer Schraube (117) am Grund der Stufenbohrung (13) des Stellgliedgehäuses (10) festgeschraubt. Der Spulenkörper (115) ist beispielsweise aus Kunststoff oder einer Aluminiumlegierung hergestellt.

Das bewegliche Teil des Stellglieds (110) ist der Topfmagnet (111, 112, 113). Er ist ein aus einem außen gasnitrierten Einsatzstahl gefertigter Topf bzw. Glocke (111), in der ein zylindrischer Magnetkern (112), z.B. ein Neodym-Magnet, eingelassen ist. Der Magnetkern (112) kann auch die Form eines zylindrischen Rohres aufweisen. Am unteren Ende des Magnetkerns (112) ist eine aus dem Werkstoff X90CrMoV18 gefertigte Jochplatte (113) angeordnet. Hierbei schließt die Unterseite der Jochplatte (113), die auch eine zentrale Bohrung aufweisen kann, zumindest annähernd mit der unteren Kante der Glocke (111) ab. In die Unterseite der Jochplatte (113) ist eine Hinterschneidung (138) eingearbeitet, die einen als Anschlagpuffer dienenden O-Ring (139) trägt. Ggf. ist der O-Ring im Bereich der Hinterschneidung (138) mit der Jochplatte verklebt.

Der Magnetkern (112) und die Jochplatte (113) haben zumindest annähernd den gleichen Außendurchmesser. Beide Teile (112, 113) sind untereinander und gegenüber der Glocke (111) z.B. verklebt.

Zwischen dem Verbund aus Magnetkern (112) und Jochplatte (113) und der radialen Innenkontur der Glocke (111) befindet sich ein Ringspalt (118), in den die Spule (115, 116) - zumindest bei geschlossener Greifelementestellung, vgl. Figuren 2 und 3 - mit geringem radialem Spiel nahezu vollständig hineinragt.

Die Glocke (111) hat bereichsweise eine zylindrische Außenwandung, die äquidistant geteilt z.B. vier Planflächen aufweist, wobei je zwei Planflächen (119) einander parallel gegenüberliegen. Diese Planflächen (119) liegen mit geringem Führungsspiel, es beträgt z.B. ca. 0,02 mm, gleitgelagert an den planen Flanken (42) des Gehäuses (10) an.

Im Bereich der zwischen dem Schlitten (60) und der Glocke (111) gelegenen Montagefuge ist ein eng am Schlitten (60) anliegender O-Ring (65) positioniert, vgl. Figur 13. Der O-Ring (65) dient als Anschlagdämpfer für den ausfahrenden Schlitten (60).

Wird nun z.B. zum Ausfahren des Schlittens (60) ein kurzer Gleichstromstoß auf die Wicklung (116) gegeben, wird der Magnetkern (112) schlagartig aus dem Spulenkörper (115) geschoben. Der Stromstoß dauert beispielsweise bei einer Spannung von 24 V und einem Strom vom 5 A ca. 20 msec an. Der mit dem Magnetkern (112) gekoppelte Schlitten (60) fährt aus, bis der O-Ring (65) durch seine Anlage am Deckel (30) abgebremst wird. Die Bestromung kann auch zeit- oder weggesteuert entlang des Schlittenhubs variiert werden. Beispielsweise wird für ca. 5 msec zum Beschleunigen ein Strom von 5 A verwendet. Dieser wird dann für eine Restbestromungszeit von ca. 15 msec auf 3 A abgesenkt. Die reine Aus- und Einfahrkraft des elektrodynamischen Stellglieds beträgt - unter Vernachlässigung von Reibung und Massenkräften - zu Beginn der Beschleunigung hier ca. 12 N.

Ggf. wird die Glocke (111) in einer oder beiden Endlagen durch einen an der Wicklung (116) angelegten Kriechstrom gehalten.

In seiner dortigen Endlage wird der Schlitten (60) über die beiden Permanentmagnete (51) gehalten. An ihnen liegen die von der Glocke (111) seitlich abstehenden Halteplatten (55) an. Die Haltekraft dieser permanentmagnetischen Kupplung beträgt beim gezeigten Ausführungsbeispiel ca. 6 N, wobei die Halteplatten (55) und die Magnete (51) - bedingt durch den O-Ring (65) - einen Spaltabstand von 0,2 bis 0,4 mm haben. Die Haltekraft wird je nach Vereinzlerbaugröße, Verwendungszweck und Stellgliedauslegung z.B. zwischen 5 und 20 N festgelegt, wobei die reine Aus- und Einfahrkraft des Stellglieds (110) jeweils mindestens doppelt so groß ist.

In der eingefahrenen Position liegen die Halteplatten (55) vor dem Magneten (52). Die permanentmagnetische Kupplung gewährleistet ein sicheres Halten des Schlittens (60) auch bei einer vibrationsbelasteten Überkopflage des Vereinzlers.

Der Vereinzler verfügt zusätzlich über eine Positionsüberwachung des Schlittens (60). Dazu sitzt auf der Platine (128) ein Hallsensor (131). Dieser ist somit unterhalb des Stellglieds (110) im Stellgliedgehäuse (10) angeordnet. Der Hallsensor (131) liefert beispielsweise ein verstärktes und temperaturkompensiertes Gleichspannungssignal, das sich proportional zur magnetischen Flussdichte des sich axial zum Sensor bewegenden Magnetkerns (112) ändert. Die zu den Stellgliedendlagen passenden Gleichspannungssignale werden in einer Auswerteelektronik derart aufbereitet, dass für das Erreichen jeder Endlage eine separate Leuchtdiode bestromt wird. Der Sensor (131) kann auch Schlittenzwischenpositionen detektieren, um z.B. damit eine Stromstärkenänderung des Antriebs zu steuern.

Die gehäuseseitigen LEDs können somit zumindest die Schlittenpositionen "ausgefahren" und "eingefahren" visuell anzeigen. Selbstverständlich können diese Signale auch über den Gerätestecker (127) an eine externe Vorrichtungssteuerung weitergegeben werden.

Die in den Figuren 1 bis 4 dargestellte Glocke (111) ist in der im Wesentlichen quaderförmigen Ausnehmung (13) des Gehäuses (10) mit geringem Spiel geführt.

Der auf der oberen Seitenwand der Glocke (111) sitzende Mitnehmer (220) trägt zwischen den Führungsstangen (223, 224) einen Magnetträger (230), vgl. Figuren 3 und 4. Letzterer ist ein quaderförmiger Klotz, der mittig - bezogen auf Figur 4 - einen nach oben abstehenden Zapfen (231) aufweist. Der Zapfen (231) hat eine Hinterdrehung (232) zum Halten eines zu Dämpfungszwecken verwendeten O-Ringes (239). Zentral im Zapfen (231) befindet sich eine kurze Sacklochbohrung (234), in der ein zylindrischer Permanentmagnet (238) befestigt ist.

Ausgehend von Figur 3 verfährt die Glocke (111) - zur Betätigung der Schlitten (171, 172), wobei der Schlitten (171) noch eingefahren ist - mit dem Mitnehmer (220) nach rechts. Hierdurch gleitet der hintere Kurvenstein (201), der sich in seiner unteren Position befindet, angetrieben von der Führungsstange (223) des Mitnehmers (220), über die Kulissenkurven (157-159) zwangsgesteuert zunächst unter 45 Winkelgraden nach rechts oben. Während dieser Gleitbewegung fährt der Schlitten (171) über die Schlittensteuerkurve (207) des Kurvensteines (201) zusätzlich nach oben.

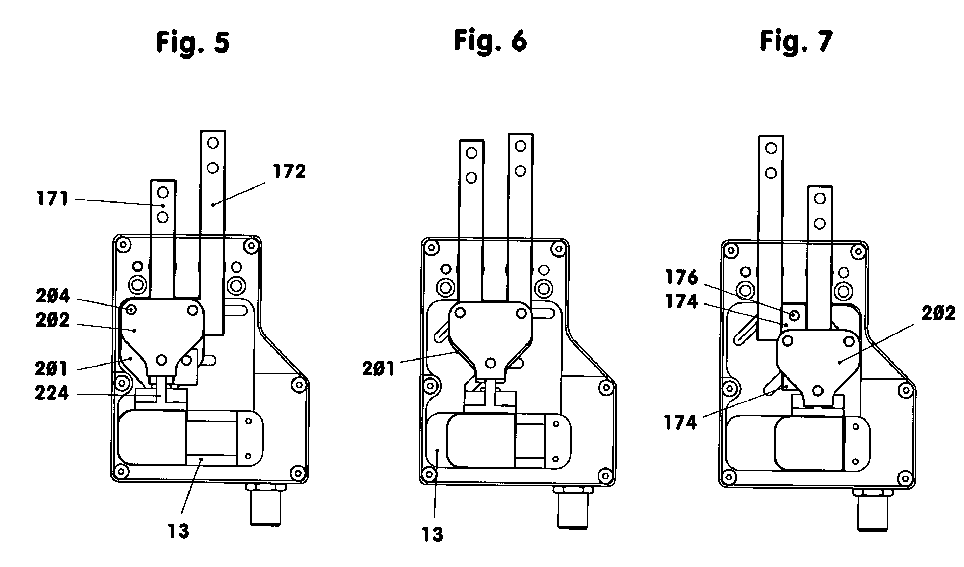

Sobald die Steinzapfen (204) in die horizontalen Abschnitte (181) der Kulissenkurven (157-159) und der Schlittenführungsstift (176) in den horizontalen Abschnitt (208) der Schlittensteuerkurve (207) hineingleitet, verändert sich der Hub des Schlittens (171) nicht mehr, obwohl die Glocke (111) erst einen Teil ihres Hubes hinter sich gebracht hat. In Figur 6 ist eine Position des Kurvensteins (201) dargestellt, kurz bevor die - hier nicht sichtbaren - Steinzapfen (204) und der Schlittenführungsstift (176) die horizontalen Kurvenabschnitte erreichen.

Die horizontalen Kurvenabschnitte der Kulissenkurven (157-159) und/oder der Schlittensteuerkurve (207) weichen ggf. zumindest in den Bereichen ihrer freien Enden von der Querrichtung z.B. um 2 bis 3 Winkelgrade ab. Die Abweichungen sind so orientiert, dass die Schlitten (171, 172) in den Hubendbereichen wieder z.B. einige zehntel Millimeter in das Gehäuse (10, 30) hineingezogen werden. Nach Figur 9 würde somit z.B. die Kulissenkurve (157) zunächst im Abschnitt (182) ansteigen, dann in einem horizontalen Abschnitt übergehen, um auf den letzten Millimetern wieder zu fallen. Die letzten Millimeter schließen dann mit dem Abschnitt (182) z.B. einen 132 Winkelgrade messenden Winkel ein, der kleiner ist als der nach Figur 9 zwischen den Abschnitten (182) und (181) gelegene 135 Winkelgrade messende Winkel.

Die vordere Führungsstange (224) des Mitnehmers (220) treibt über den vorderen Kurvenstein (202) den linken Schlitten (171) in vergleichbarer Weise an wie die Führungsstange (223) den Schlitten (172). Allerdings startet der Kulissenstein (202) aus obenliegender Position und der Schlitten (172) aus seiner ausgefahrenen Stellung. Seine Steinzapfen (204) befinden sich in den horizontalen Abschnitten der im Deckel (30) gelegenen Kulissenkurven (157-159), vgl. Figur 1 und 2. Auch der Schlittenführungsstift (176) des Schlittens (172) ruht im horizontalen Abschnitt der Schlittensteuerkurve (207).

Hier bewegt sich der Kurvenstein (202), vgl. Figur 1, zunächst nach rechts, ohne die Position des Schlittens (172) zu ändern.

Sobald die Steinzapfen (204) die Knickstelle (182) der Kulissenkurven (157-159) erreichen, wird der Kurvenstein (202) nach rechts unten verschoben und zugleich der Schlitten (172) eingefahren, vgl. Figur 7.

Beide Schlitten (171, 172) haben die gleiche Ausfahrstellung, wenn die Glocke (111) den halben Stellgliedhub absolviert hat. Durch eine entsprechende Änderung des Kurvenverlaufs der Kulissenkurven (157-159) und der Schlittensteuerkurve (207) kann das Ausfahrverhalten der Schlitten nahezu beliebig manipuliert werden. Anstelle der einfach abgewinkelten Kurven kann z.B. eine zweifach abgewinkelte Kurve verwendet werden. In einem einfachen Fall schließt sich an den abgewinkelten Abschnitt (182) wieder ein horizontaler Abschnitt an. In einem anderen Fall hat die Kurve die Form eines Kreisbogenabschnitts oder sie ist sichelförmig oder s-förmig gekrümmt.

Unabhängig von der Kurvenform benötigt das Gehäuse (10) und der Deckel (30) theoretisch jeweils nur eine Kulissenkurve, sofern die Führungen der Glocke (111) und der Kurvensteine (201, 202) steif genug sind.

Zur Fixierung der Schlitten mit einer Haltekraft von ca. 2 bis 8 N legt sich der jeweils eingefahrene Schlitten (171, 172) an den zwischen den Führungsstangen (223, 224) gelegenen Permanentmagneten (238) an.

Alle Führungsstifte oder -zapfen mit kreisrundem Querschnitt, die in den Führungskanälen (157-159, 207) entlangbewegt werden, können in ihrem Träger (174, 201, 202) wälzgelagert angeordnet sein, oder an ihren freien Enden gleit- oder wälzgelagerte Rollen tragen. Auf diese Weise wird die Reibung zwischen den Führungskanälen und den Führungsstiften oder -zapfen reduziert.

Der Spulenkörper (115) sitzt in einem sattelartig geformten Spulenträger (251), der nach Figur 3 im rechten Bereich der Ausnehmung (13) des Gehäuses (10) angeordnet ist. Er ist mit der Rückwand (151) des Gehäuses (10) über eine Senkschraube (255) verschraubt, vgl. Figur 2, während er sich im Deckel (30) über zwei Passstifte (257) abstützt, vgl. Figur 1.

Das relativ dichte Gehäuse (10, 30) weist ggf. z.B. im Bereich der Anflanschstellen eine Gewindebohrung auf, die in der Regel mittels eines Gewindestifts verschlossen ist. Soll jedoch die Vorrichtung in einem Reinstraum verwendet werden, wird über die Gewindebohrung ein Unterdruckschlauch angeschlossen, um die in den Gehäuseinnenraum gelangte Umgebungsluft abzusaugen.

Wird die Vorrichtung dagegen z.B. in besonders staubhaltiger Umgebung eingesetzt, wird das Gehäuseinnere über einen an dieser Gewindebohrung angeschlossenen Überdruckschlauch mit sauberer Sperrluft versorgt. Durch den Überdruck an den Arbeitsfugen kann so kein Schmutz in das Gehäuseinnere eindringen.

Einige Getriebeteile sind gegen- oder ineinander mit geringem Spiel gelagert. Ein derartiges Spiel misst in der Regel zwischen 0,02 und 0,2 mm.

### Bezugszeichenliste:

- 1, 2: Stößel
- 3: Querrichtung
- 5: Führungslängsrichtung
- 8: Ausfahrrichtung, Führungslängsrichtung

- 10: Gehäuse, Stellgliedgehäuse, Gehäuseteile
- 12: Wandung, rechts
- 13: Stufenbohrung; Ausnehmung, oben
- 14: Bund
- 15: Ausnehmung, flach
- 16: Ausnehmung, tief, unten
- 17: Bohrung, Verbindungsbohrungen
- 18: Gewindebohrung

- 21: Schrauben für Gehäuseverschraubung
- 25: Gehäusedeckel, seitlich
- 26: Bohrungen für LED's
- 27: Distanzhülse
- 28: Spezialverschraubung

- 30: Gehäusedeckel; Gehäuseteile
- 32: Eindrehung, außen
- 33: Eindrehung, innen
- 36: Sacklochbohrung für Magnete
- 37: Befestigungsbohrungen, seitlich
- 38: Passstiftbohrungen, seitlich
- 39: Lippendichtring

- 41: Bereich von (13), rechteckig, Mitte
- 42: Flanken, plane
- 47: Sacklöcher

- 51: Haltemagnete, ausgefahrene Position
- 52: Haltemagnete, eingefahrene Position
- 55: Halteplatten

- 60: Schlitten
- 61: Führungsfläche, zylindrisch
- 65: O-Ring
- 66: Adapterabschnitt, vierkantförmig
- 67: Bohrungen, Querbohrungen
- 68: Bohrungen, quer zu (66), Querbohrungen
- 69: Mittellinie

- 71: Verschraubung

- 110: Stellglied
- 111: Glocke, Topf; Teil des Topfmagnets
- 112: Magnetkern, Permanentmagnet; Teil des Topfmagnets
- 113: Jochplatte; Teil des Topfmagnets
- 115: Spulenkörper, ortsfest; Spule
- 116: Wicklung, Spule
- 117: Schraube
- 118: Ringspalt
- 119: Planflächen

- 120: Ansteuerung, Stellgliedansteuerungselektronik
- 121: Platine, horizontal
- 122: Aufsatzplatine, vertikal
- 123: Steckkontakte
- 124: Kondensator
- 125: Platine, vertikal
- 126: Leuchtdioden, LEDs
- 127: Gerätestecker
- 128: Aufsatzplatine

- 131: Hallsensor
- 132: Filmplatine, flexibel
- 138: Hinterschneidung an (113)
- 139: O-Ring

- 151: Gehäuserückwand
- 152: Ausnehmung, quaderförmig
- 153: Oberseite
- 154: Führungskanal für (171)
- 155: Führungskanal für (172)
- 156: Schmiertasche
- 157: Kulissenkurve
- 158: Kulissenkurve
- 159: Kulissenkurve

- 171: Schlitten
- 172: Schlitten
- 174: Lappen
- 175: Bohrung
- 176: Schlittenführungsstift

- 181: Abschnitt, horizontal, gerade
- 182: Abschnitt, abgewinkelt, gerade
- 183: Übergang zwischen (181) und (182), Bogen
- 200: Kulissengetriebe
- 201: Kurvenstein, unten bzw. hinten; Zwischenelement
- 202: Kurvenstein, oben bzw. vorn; Zwischenelement
- 203: Rückseite des Kurvensteins
- 204: Steinzapfen
- 205: Vorderseite des Kurvensteins
- 206: Steinsteuerkanal
- 207: Schlittensteuerkurve
- 208: Abschnitt, horizontal, gerade
- 209: Abschnitt, abgewinkelt, gerade

- 220: Mitnehmer
- 221: Flanschplatte
- 223: Führungsstange, hinten
- 224: Führungsstange, vorn

- 230: Magnetträger
- 231: Zapfen
- 232: Hinterdrehung

- 234: Sacklochbohrung
- 238: Permanentmagnet
- 239: O-Ring

- 251: Spulenträger
- 255: Senkschraube
- 257: Passstifte

- 301: Bohrung in (111)

## Patentansprüche

1. Vereinzler mit zwei in Führungslängsrichtung (5) geführten Schlitten (171, 172), die jeweils einen Stößel (1, 2) tragen;
- wobei die Schlitten (171, 172) antreibbar mit mindestens einem Stellglied (110) in einem Gehäuse (10, 30) gelagert sind,
- wobei die Schlitten (171, 172) die Stößel (1, 2) zwischen einer ausgefahrenen und einer eingefahrenen Stellung bewegen,
**dadurch gekennzeichnet,**
- **dass** beide Schlitten (171, 172) durch ein Stellglied (110) elektrisch antreibbar sind, wobei das Stellglied (110) aus einer Tauchspule (115, 116) und einem Topfmagnet (111, 112, 113) besteht,
- **dass** zwischen dem bewegbaren Teil des Stellglieds (110) und den Schlitten (171, 172) ein Kulissengetriebe (200) angeordnet ist,
- **dass** das Kulissengetriebe (200) pro Schlitten (171, 172) einen antreibenden Kurvenstein (201, 202) und mindestens eine gehäuseseitige Kulissenkurve (157, 158, 159) aufweist,
- **dass** jeder Kurvenstein (201, 202) mindestens einen Steinsteuerkanal (206) und eine Schlittensteuerkurve (207) aufweist, wobei der Steinsteuerkanal (206) an einer Führungsstange (223, 224) des bewegbaren Teils des Stellglieds (110) geführt ist,
- **dass** jeder Kurvenstein (201, 202) mindestens einen Steinzapfen (204) zum Eingriff in eine gehäuseseitige Kulissenkurve (157-159) aufweist,
- **dass** jeder Schlitten (171, 172) mindestens einen Schlittenführungsstift (176) zum Eingriff in eine Schlittensteuerkurve (207) aufweist,
- **dass** jede Kulissenkurve (157-159) und jede Schlittensteuerkurve (207) mindestens einen ersten Abschnitt (181, 208) aufweist, der mit der Ausfahrrichtung (8) der Schlitten (171, 172) einen Winkel von 87 bis 93 Winkelgraden einschließt,
- **dass** jede Kulissenkurve (157-159) und jede Schlittensteuerkurve (207) mindestens einen zweiten Abschnitt (182, 209) aufweist, der zur Ausfahrrichtung (8) der Schlitten (171, 172) einen Winkel von 30 bis 150 Winkelgraden einschließt.

2. Vereinzler gemäß Anspruch 1, **dadurch gekennzeichnet, dass** der erste Abschnitt jeder Kurve (157-159, 209) quer zur Ausfahrrichtung (8) der Schlitten (171, 172) orientiert ist.

3. Vereinzler gemäß Anspruch 1 und 2, **dadurch gekennzeichnet, dass** der zweite Abschnitt (209) der Schlittensteuerkurve (207) des jeweiligen Kurvensteins (201, 202) mit dem zweiten Abschnitt (182) mindestens einer - diesen Kurvenstein (201, 202) führenden - Kulissenkurve (157-159) einen Winkel von 70 bis 110 Winkelgraden einschließt.

4. Vereinzler gemäß Anspruch 1, **dadurch gekennzeichnet, dass** bei dem halben Hub des Stellglieds (110) die Schlitten (171, 172) auf gleicher Höhe stehen, also gleich weit aus dem Gehäuse (10, 30) herausragen.

## Claims

1. A separator comprising a pair of carriage members (171, 172) guided to move in the longitudinal guiding direction (5) and carrying a pusher element (1, 2) each;
- said carriage members (171, 172) drivably mounted in a housing (10, 30) together with at least one actuator (110),
- with the carriage members (171, 172) moving the pusher elements (1, 2) between advanced and retracted positions;
**characterized in that**
- both carriage members (171, 172) are adapted to be powered electrically by an actuator (110), said actuator (110) comprising a plunger-type coil (115, 116) and a pot magnet (111, 112, 113),
- a slotted-link-type transmission mechanism (200) is disposed between the movable portion of the actuator (110) and the carriage members (171, 172),
- said slotted-link-type transmission mechanism (200) comprising per carriage member (171, 172) one driving block (201, 202) and at least one housing-side cam slot (157, 158, 159), and **in that**
- each block (201, 202) has therein at least one block control channel (206) and a carriage cam (207), with the block control channel (206) guided on a guide rod (223, 224) on the movable portion of the actuator (110),
- each block (201, 202) has at least one pin (204) for engaging a housing-side link cam (157-159),
- each carriage member (171, 172) has at least one carriage guide pin (176) for engaging a carriage cam (207),
- each link cam (157-159) and each carriage cam (207) has at least one first section (181, 208) including an angle of 87 to 93 degrees with the direction of advance (8) of carriage members (171, 172), and
- each link cam (157-159) and each carriage control cam 207) has at least one second section (182, 209) including an angle of 30 to 150 degrees with the direction of advance (8) of carriage members (171, 172).

2. Separator as claimed in claim 1, **characterized in that** said first section of each cam (157-159) is oriented transversely of the direction of advance (8) of carriage members (171, 172).

3. Separator as claimed in claim 1 and 2, **characterized in that** the second portion (209) of the carriage control cam (207) of each cam block (201, 202) includes an angle of 70 to 110 degrees with the second section (182) of at least one link cam (157-159) which guides the respective cam block (201, 202).

4. Separator as claimed in claim 1, **characterized in that** the carriage members (171, 172), in the 50% position of the stroke of the actuator (110) are at the same height, they thus extend equally far from housing (10, 30).

## Revendications

1. Séparateur comportant deux chariots (171, 172) guidés dans le sens longitudinal du guidage (5) qui portent chacun un coulisseau (1, 2),
- les chariots (171, 172) qui peuvent être entraînés étant logés avec au moins un actionneur (110) dans un boîtier (10, 30),
- les chariots (171, 172) déplaçant les coulisseaux (1, 2) entre une position déployée et une position rétractée,
**caractérisé en ce**
- **que** les deux chariots (171, 172) peuvent être entraînés électriquement par un actionneur (110), l'actionneur (110) étant composé d'une bobine mobile (115, 116) et d'un aimant en pot (111, 112, 113),
- **qu'**un mécanisme à coulisse (200) est placé entre la partie mobile de l'actionneur (110) et le chariot (171, 172),
- **que** le mécanisme à coulisse (200) présente pour chaque chariot (171, 172) une plaque coulissante entraînante (201, 202) et au moins une courbe de guidage (157-159) du côté boîtier,
- **que** chaque plaque coulissante (201, 202) présente au moins un canal de commande (206) de plaque et une courbe de commande de chariot (207), le canal de commande (206) de la plaque coulissante étant guidé sur une tige de guidage (223, 224) de la partie mobile de l'actionneur (110),
- **que** chaque plaque coulissante (201, 202) présente au moins un tenon (204) destiné à s'engager dans une courbe de guidage (157-159) située du côté boîtier,
- **que** chaque chariot (171, 172) présente au moins une tige de guidage (176) destinée à s'engager dans une courbe de commande (207) de chariot,
- **que** chaque courbe de guidage (157-159) et chaque courbe de commande de chariot (207) présentent au moins une première section (181, 208) qui renferme un angle entre 87 et 93 degrés avec la direction de déploiement (8) des chariots (181, 208),
- **que** chaque courbe de guidage (157-159) et chaque courbe de commande de chariot (207) présentent au moins une deuxième section (182, 209) qui renferme un angle entre 30 à 150 degrés par rapport à la direction de déploiement (8) des chariots (171, 172).

2. Séparateur selon la revendication 1, **caractérisé en ce que** la première section de chaque courbe (157-159, 209) est orientée transversalement par rapport à la direction du déploiement des chariots (171, 172).

3. Séparateur selon les revendications 1 et 2, **caractérisé en ce que** la deuxième section (209) de la courbe de commande de chariot (207) de la plaque coulissante correspondante (201, 202) renferme un angle de 70 à 110 degrés avec la deuxième section (182) d'au moins une courbe de guidage (157-159) guidant cette plaque coulissante (201, 202).

4. Séparateur selon la revendication 1, **caractérisé en ce qu'**à la mi-course de l'actionneur (110) les chariots (171, 172) se trouvent à la même hauteur, l'un par rapport à l'autre, et de ce fait font saillie du boîtier (10, 30) à égale longueur.
